# EUROPEAN PATENT APPLICATION

(11) **EP 2 518 125 A1**
(43) Date of publication of application: **31.10.2012**
(21) Application number: 10839365.3
(22) Date of filing: 20.12.2010
(51) Int. Cl.: C09K 3/18, C08L 33/16

(54) **WATER-AND-OIL REPELLANT COMPOSITION, PROCESS FOR PRODUCING SAME, AND METHOD FOR TREATING ARTICLE**

(30) Priority: 25.12.2009 JP 2009294368
(71) Applicant: Asahi Glass Company, Limited, Tokyo 100-8405 (JP)
(72) Inventor: HIRONO, Takao, Tokyo 100-8405 (JP); OOMORI, Yuuichi, Tokyo 100-8405 (JP); SHIMADA, Minako, Tokyo 100-8405 (JP); SUGIMOTO, Shuichiro, Tokyo 100-8405 (JP)
(74) Representative: Müller-Boré & Partner Patentanwälte
(86) International application number: PCT/JP2010/072932
(87) International publication number: WO 2011/078135

(57) **Abstract**

To provide a water/oil repellent composition which is capable of imparting sufficient dynamic water repellency to the surface of an article, has high stability of the particles of the copolymer, and presents a low environmental impact, a method for its production, and a method for treating an article. A water/oil repellent composition comprising a copolymer (A) having structural units based on a monomer (a) having a C₁₋₆ polyfluoroalkyl group, structural units based on a (meth)acrylate (b) having a Z20-30 alkyl group and structural units based on a halogenated olefin (c), a surfactant (B), and a medium (C), wherein the medium (C) comprises water and a propylene glycol type solvent, and the amount of the propylene glycol type solvent is from 35 to 80 parts by mass per 100 parts by mass of the copolymer (A).

## Description

### TECHNICAL FIELD

The present invention relates to a water/oil repellent composition, a method for its production and a method for treating an article by means of the water/oil repellent composition.

### BACKGROUND ART

As a method for imparting water/oil repellency to the surface of an article (such as a fiber product), a method of treating the article by means of a water/oil repellent composition having, dispersed in a medium, a copolymer having structural units based on a monomer having a polyfluoroalkyl group having at least 8 carbon atoms (a polyfluoroalkyl group will be hereinafter referred to as a R^{f} group), has been known.

However, recently, EPA (US Environmental Protection Agency) has pointed out that a compound having a perfluoroalkyl group (a perfluoroalkyl group will be hereinafter referred to as a R^{F} group) having at least 8 carbon atoms is likely to be decomposed in the environment or in vivo, and the decomposition product is likely to be accumulated, i.e. it presents a high environmental impact. Therefore, a copolymer for a water/oil repellent composition has been required which has structural units based on a monomer having a R^{f} group having at most 6 carbon atoms, wherein the number of structural units based on a monomer having a R^{f} group having at least 8 carbon atoms are reduced as far as possible.

As a water/oil repellent composition containing such a copolymer, the following water/oil repellent composition has been, for example, proposed.

A water/oil repellent composition comprising a copolymer having structural units based on the following monomer (a), structural units based on the following monomer (b) and structural units based on the following monomer (c), and a medium (Patent Documents 1 and 2):
monomer (a): a monomer having a C₁₋₆ R^{F} group;
monomer (b): a (meth)acrylate having a C₂₀₋₃₀ alkyl group; and
monomer (c): a halogenated olefin.

However, an article treated with such a water/oil repellent composition is still insufficient in water repellency against water fallen from a height (rain fall) (hereinafter referred to as dynamic water repellency). Further, it is insufficient in mechanical stability of particles of copolymers contained in the water/oil repellent composition.

### PRIOR ART DOCUMENTS

### PATENT DOCUMENTS

Patent Document 1: WO2008/136435
Patent Document 2: WO2009/113589

### DISCLOSURE OF INVENTION

### TECHNICAL PROBLEM

The present invention is to provide a water/oil repellent composition which is capable of imparting sufficient dynamic water repellency to the surface of an article, has high mechanical stability of particles of a copolymer and is highly stable against change in temperature, and presents a low environmental impact, a method for its production, and a method for treating an article.

### SOLUTION TO PROBLEM

The water/oil repellent composition of the present invention comprises a copolymer (A) having structural units based on the following monomer (a), structural units based on the following monomer (b) and structural units based on the following monomer (c), a surfactant (B), and a medium (C), wherein the medium (C) comprises water and a propylene glycol type solvent, and the amount of the propylene glycol type solvent is from 35 to 80 parts by mass per 100 parts by mass of the copolymer (A):
monomer (a): a monomer having a C₁₋₆ polyfluoroalkyl group;
monomer (b): a (meth)acrylate having no polyfluoroalkyl group and having a C₂₀₋₃₀ alkyl group; and
monomer (c): a halogenated olefin.

The propylene glycol type solvent is preferably dipropylene glycol and/or dipropylene glycol monomethyl ether.

The copolymer (A) preferably further has structural units based on the following monomer (d):
monomer (d): a monomer having no polyfluoroalkyl group and having a polar group or a crosslinkable functional group.

Further, the copolymer (A) in the water/oil repellent composition are preferably dispersed as fine particles in the medium (C), and the average particle size of the fine particles is preferably from 10 to 200 nm.

The method for producing a water/oil repellent composition of the present invention comprises polymerizing a monomer mixture comprising the following monomer (a), the following monomer (b) and the following monomer (c) in a medium (C) in the presence of a surfactant (B) and a polymerization initiator to obtain a copolymer (A), wherein the medium (C) comprises water and a propylene glycol type solvent, and the amount of the propylene glycol type solvent is from 35 to 80 parts by mass per 100 parts by mass of the monomer mixture:
monomer (a): a monomer having a C₁₋₆ polyfluoroalkyl group;
monomer (b): a (meth)acrylate having no polyfluoroalkyl group and having a C₂₀₋₃₀ alkyl group; and
monomer (c): a halogenated olefin.

The propylene glycol type solvent is preferably dipropylene glycol and/or dipropylene glycol monomethyl ether.

The amount of the water is preferably from 60 to 400 parts by mass per 100 parts by mass of the monomer mixture, and the mass ratio (water/propylene glycol type solvent) of the water to the propylene glycol type solvent is preferably from 2 to 5.

The monomer mixture preferably further contains the following monomer (d):
monomer (d): a monomer having no polyfluoroalkyl group and having a polar group or a crosslinkable functional group.

Further, the amount of the surfactant (B) is preferably from 1 to 10 parts by mass per 100 parts by mass of the monomer mixture.

Further, the water/oil repellent composition obtained by the production method of the present invention is preferably the water/oil repellent composition as defined above.

Further, the water/oil repellent composition as defined above is preferably produced by diluting the water/oil repellent composition obtained by the production method of the present invention as defined above with water and/or a propylene glycol type solvent.

The method for treating an article of the present invention comprises treating an article with a treating liquid containing the water/oil repellent composition of the present invention. The treating liquid preferably further contains a thermosetting agent.

### ADVANTAGEOUS EFFECTS OF INVENTION

The water/oil repellent composition of the present invention is capable of imparting sufficient dynamic water repellency to the surface of an article, has high mechanical stability of particles of a copolymer and is highly stable against change in temperature, and presents a low environmental impact.

By the method for producing a water/oil repellent composition of the present invention, it is possible to impart sufficient dynamic water repellency to the surface of an article and to produce a water/oil repellent composition which has high mechanical stability of particles of a copolymer and is highly stable against change in temperature, and presents a low environmental impact.

By the method for treating an article of the present invention, it is possible to impart sufficient dynamic water repellency to the surface of an article, and the environmental impact is low.

### DESCRIPTION OF EMBODIMENTS

In this specification, a compound represented by the formula (1) will be referred to as a compound (1). Compounds represented by other formulae will also be referred to in the same manner. Further, in this specification, a group represented by the formula (2) will be referred to as a group (2). Groups represented by other formulae will also be referred to in the same manner. Further, a (meth)acrylate in this specification means an acrylate or a methacrylate. Further, in this specification, a monomer means a compound having a polymerizable unsaturated group. Further, in this specification, a R^{f} group is a group having some or all of hydrogen atoms in an alkyl group substituted by fluorine atoms, and a R^{F} group is a group having all hydrogen atoms in an alkyl group substituted by fluorine atoms. A water/oil repellent composition in the present invention means a composition obtained by adding a medium to a water/oil repellent composition immediately after production of a fluorocopolymer or a water/oil repellent composition immediately after its production to dilute them, as long as it is not particularly described.

### <Water/oil repellent composition>

The water/oil repellent composition of the present invention comprises, as essential components, a copolymer (A), a surfactant (B) and a medium (C) and may further contain an additive as the case requires.

### (Copolymer (A))

The copolymer (A) is a copolymer which has structural units based on a monomer (a), structural units based on a monomer (b) and structural units based on a monomer (c) and may further have structural units based on a monomer (d) and structural units based on a monomer (e), as the case requires.

### Monomer (a):

The monomer (a) is a monomer having a C₁₋₆ polyfluoroalkyl group.

The C₁₋₆ polyfluoroalkyl group in the present invention is a group represented by CₐF_{2a+1-b}H_{b}-, wherein a is an integer of from 1 to 6, (2a+1-b) is an integer of at least 2, and b is an integer of at least 0. In this regard, this polyfluoroalkyl group has no carbon atom having 2 or more hydrogen atoms bonded, such as a methylene group or a methyl group. b is preferably an integer smaller than a, more preferably 0 or 1. Particularly, b is preferably 0, i.e. the polyfluoroalkyl group is preferably a perfluoroalkyl group. The polyfluoroalkyl group may be branched, but it is more preferably linear.

When the copolymer (A) has polymerization units based on the monomer (a), the hydrophobicity of the copolymer (A) will be improved, whereby better water durable repellency will be exhibited.

The monomer (a) is preferably a compound (1). Here, in the formula (1), the boundary between Z and Y is determined so that the number of carbon atoms in Z becomes smallest.

(Z-Y)ₙX (1)

Z is a C₁₋₆ R^{f} group or a group (2) having a C₁₋₆ R^{F} group (i.e. CiF₂ᵢ₊ᵢ-):

CᵢF₂ᵢ₊₁O(CFX¹CF₂O)ⱼCFX²- (2)

wherein i is an integer of from 1 to 6, j is an integer of from 0 to 10, and each of X¹ and X² which are independent of each other, is a fluorine atom or a trifluoromethyl group.

The R^{f} group and CᵢF₂ᵢ₊₁- in the group (2) is a C₁₋₆ polyfluoroalkyl group. The R^{f} group is preferably a R^{F} group (i.e. a C₁₋₆ perfluoroalkyl group).

Z may, for example, be the following groups:
F(CF₂)₄-,
F(CF₂)₅-,
F(CF₂)₆-,
(CF₃)₂CF(CF₂)₂-,
CₖF₂ₖ₊₁O[CF(CF₃)CF₂O]ₕ-CF(CF₃)-, etc.
wherein k is an integer of from 1 to 6, and h is an integer of from 0 to 10.

Y is a bivalent organic group or a single bond.

The bivalent organic group is preferably an alkylene group. The alkylene group may be linear or branched. The alkylene group may have -O-, -NH-, -CO-, -S-, -SO₂-, -CD¹=CD²- (wherein each of D¹ and D² which are independent of each other, is a hydrogen atom or a methyl group), etc.

Y may, for example, be the following groups.
- CH₂-,
- CH₂CH₂-,
- (CH₂)₃-,
- CH₂CH₂CH(CH₃)-,
- CH=CH-CH₂-,
- S-CH₂CH₂-,
- CH₂CH₂-S-CH₂CH₂-,
- CH₂CH₂-SO₂-CH₂CH₂-,
- W-OC(O)NH-A-NHC(O)O-(CₚH₂ₚ)-, etc.
wherein p is an integer of from 2 to 30.

A is a symmetric alkylene group having no branch, an arylene group or an aralkylene group and is preferably -C₆H₁₂-, -ϕ-CH₂-ϕ- or -ϕ- (wherein ϕ is a phenylene group).

W is any one of the following groups.
-SO₂N(R¹)-C_{d}H_{2d}-,
-CONHC_{d}H_{2d}-,
-CH(R^{F1})-CₑH₂ₑ-,
-C_{q}H_{2q}-
wherein R¹ is a hydrogen atom or a C₁₋₄ alkyl group, d is an integer of from 2 to 8, R^{F1} is a C₁₋₆ perfluoroalkyl group, e is an integer of from 0 to 6, and q is an integer of from 1 to 20. R^{F1} is preferably a C₄ or C₆ perfluoroalkyl group.

n is 1 or 2.

X is, when n is 1, any one of groups (3-1) to (3-5) and when n is 2, any one of groups (4-1) to (4-4):

-CR=CH₂ (3-1)

-C(O)OCR=CH₂ (3-2)

-OC(O)CR=CH₂ (3-3)

-OCH₂-ϕ-CR=CH₂ (3-4)

-OCH=CH₂ (3-5)

wherein R is a hydrogen atom, a methyl group or a halogen atom, and ϕ is a phenylene group.

-CH[-(CH₂)ₘCR=CH₂]- (4-1)

-CH[-(CH₂)ₘC(O)OCR=CH₂]- (4-2)

-CH[-(CH₂)ₘOC(O)CR=CH₂]- (4-3)

-OC(O)CH=CHC(O)O- (4-4)

wherein R is a hydrogen atom, a methyl group or a halogen atom, and m is an integer of from 0 to 4.

The compound (1) is preferably a (meth)acrylate having a C₄₋₆ R^{F} group from the viewpoint of e.g. the polymerizability with other monomers, the flexibility of the coating film containing the copolymer (A), the adhesion of the copolymer (A) to an article, the solubility in the medium (C) and efficiency of the emulsion polymerization.

The compound (1) is preferably a compound wherein Z is a C₄₋₆ R^{F} group, Y is a C₁₋₄ alkylene group, n is 1, and X is the group (3-3).

### Monomer (b):

The monomer (b) is a (meth)acrylate having no R^{f} group and having a C₂₀₋₃₀ alkyl group. When the alkyl group has at least 20 carbon atoms, good dynamic water repellency and post-air-drying water repellency will be obtained. When the alkyl group has at most 30 carbon atoms, the melting point tends to be relatively low, thus leading to good handling efficiency.

The monomer (b) is preferably behenyl (meth)acrylate, particularly preferably behenyl acrylate.

### Monomer (c):

The monomer (c) is a halogenated olefin. When the copolymer (A) has structural units based on the monomer (c), the strength of the coating film composed of the copolymer (A) will be improved, and the adhesion between the coating film composed of the copolymer (A) and a substrate will be improved.

The halogenated olefin is preferably a chlorinated olefin or a fluorinated olefin, and specifically, it may, for example, be vinyl chloride, vinylidene chloride, tetrafluoroethylene or vinylidene fluoride. In view of interaction with a substrate, vinyl chloride or vinylidene chloride is particularly preferred.

### Monomer (d):

The monomer (d) is a monomer having no R^{f} group and having a polar group or a crosslinkable functional group.

By having structural units based on the monomer (d), the abrasion resistance will further be improved.

The polar group or the crosslinkable functional group is preferably a functional group having at least one bond selected from a covalent bond, an ionic bond and a hydrogen bond, or a functional group capable of forming a crosslinked structure by an interaction of such bonds. Otherwise, a compound having an active organic group or an element such as hydrogen or halogen in its molecule may be used.

Such a functional group is preferably a hydroxy group, an isocyanate group, a blocked isocyanate group, an alkoxysilyl group, an amino group, an alkoxymethylamide group, a silanol group, an ammonium group, an amide group, an epoxy group, an oxazoline group, a carboxy group, an alkenyl group, a sulfonic acid group or the like, particularly preferably a hydroxy group, a blocked isocyanate group, an amino group or an epoxy group.

The monomer (d) is preferably a (meth)acrylate, an acrylamide, a vinyl ether or a vinyl ester.

The monomer (d) may, for example, be the following compounds.

2-Isocyanatoethyl (meth)acrylate, 3-isocyanatopropyl (meth)acrylate, 4-isocyanatobutyl (meth)acrylate, a 2-butanoneoxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanoneoxime adduct of 3-isocyanatopropyl (meth)acrylate, a pyrazole adduct of 3-isocyanatopropyl (meth)acrylate.

A 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanoneoxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, an ε-caprolactam adduct of 4-isocyanatobutyl (meth)acrylate.

Methoxymethyl (meth)acrylamide, ethoxymethyl (meth)acrylamide, butoxymethyl (meth)acrylamide, diacetone acrylamide, 3-methacryloyloxypropyl trimethoxysilane, vinyl trimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyl trimethylammonium chloride, (meth)acryloyloxypropyl trimethylammonium chloride, (meth)acrylamidoethyl trimethylammonium chloride, (meth)acrylamidopropyl trimethylammonium chloride.

t-butyl (meth)acrylamide sulfonic acid, (meth)acrylamide, N-methyl (meth)acrylamide, N-methylol (meth)acrylamide, N-butoxymethyl (meth)acrylamide, diacetone (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate, (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, 2-vinyl-4-methyl-(2-vinyloxazoline), a polycaprolactone ester of hydroxyethyl (meth)acrylate.

Tri(meth)allyl isocyanurate (T(M)AIC manufactured by Nippon Kasei Chemical Co., Ltd.), triallyl cyanurate (TAC manufactured by Nippon Kasei Chemical Co., Ltd.), phenylglycidylethyl acrylate tolylene diisocyanate (AT-600 manufactured by KYOEISHA CHEMICAL Co., Ltd.), 3-(methylethylketoxime)isocyanatomethyl-3,5,5-trimethylcyclohexyl(2-hydroxyethyl methacrylate) cyanate (TECHCOAT HE-6P manufactured by Kyoken Kasei), a polycaprolactone ester of hydroxyethyl (meth)acrylate (PLACCEL FA, FM series manufactured by Daicel Chemical Industries, Ltd.).

Vinyl monochloroacetate, 2-chloroethyl vinyl ether, 2-hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 4-hydroxycyclohexyl vinyl ether, 1,6-hexanediol monovinyl ether, 1,4-cyclohexanedimethanol monovinyl ether, diethylene glycol monovinyl ether, triethylene glycol monovinyl ether, dipropylene glycol monovinyl ether, vinyl glycidyl ether, 2-aminoethyl vinyl ether, 3-aminopropyl vinyl ether, 2-aminobutyl vinyl ether, allyl vinyl ether, 1,4-butanediol divinyl ether, nonanediol divinyl ether, cyclohexanediol divinyl ether, cyclohexanedimethanol divinyl ether, triethylene glycol divinyl ether, trimethylolpropane trivinyl ether, pentaerythritol tetravinyl ether.

The monomer (d) is preferably N-methylol (meth)acrylamide, 2-hydroxyethyl (meth)acrylate, glycidyl (meth)acrylate, 3-chloro-2-hydroxypropyl methacrylate, or a polycaprolactone ester of hydroxyethyl (meth)acrylate (PLACCEL FA or FM-series manufactured by Daicel Chemical Industries, Ltd.).

### Monomer (e):

The monomer (e) is a monomer other than the monomers (a), (b) (c) and (d).

The monomer (e) may, for example, be the following compounds.

Methyl (meth)acrylate, ethyl (meth)acrylate, propyl (meth)acrylate, butyl (meth)acrylate, cyclohexyl (meth)acrylate, 2-ethylhexyl (meth)acrylate, n-hexyl (meth)acrylate, benzyl (meth)acrylate, octyl (meth)acrylate, decyl methacrylate, stearyl (meth)acrylate, 3-ethoxypropyl acrylate, methoxy-butyl acrylate, 2-ethylbutyl acrylate, 1,3-dimethylbutyl acrylate, 2-methylpentyl acrylate, n-propyl vinyl ether, isopropyl vinyl ether, n-butyl vinyl ether, isobutyl vinyl ether, 2-ethylhexyl vinyl ether, octadecyl vinyl ether, cyclohexyl vinyl ether.

Vinyl acetate, vinyl propionate, butene, isoprene, butadiene, ethylene, propylene, vinyl ethylene, pentene, ethyl-2-propylene, butylethylene, cyclohexylpropylethylene, decylethylene, dodecylethylene, hexene, isohexylethylene, neopentylethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene, nonylstyrene.

N,N-dimethyl (meth)acrylamide, vinyl alkyl ether, halogenated alkyl vinyl ether, vinyl alkyl ketone, aziridinylethyl (meth)acrylate, 2-ethylhexylpolyoxyalkylene (meth)acrylate, polyoxyalkylene di(meth)acrylate.

Crotonic acid alkylester, maleic acid alkylester, fumaric acid alkylester, citraconic acid alkylester, mesaconic acid alkylester, allyl acetate, N-vinylcarbazole, maleimide, N-methylmaleimide, a (meth)acrylate having silicone in its side chain, a (meth)acrylate having a urethane bond, a (meth)acrylate having a polyoxyalkylene chain having a C₁₋₄ alkyl group at its terminal, an alkylene di(meth)acrylate, etc.

The total proportion of the structural units based on the monomer (a), the structural units based on the monomer (b), and the structural units based on the monomer (c) is preferably from 80 to 100 mass%, more preferably from 85 to 100 mass%, particularly preferably from 90 to 100 mass%, based on the structural units (100 mass%) based on all monomers, from the viewpoint of the dynamic water repellency.

The proportion of the structural units based on the monomer (a) is preferably from 1 to 50 mass%, more preferably from 5 to 30 mass%, particularly preferably from 10 to 25 mass%, based on the structural units (100 mass%) based on all monomers, from the viewpoint of the dynamic water repellency.

The proportion of the structural units based on the monomer (b) is preferably from 30 to 98 mass%, more preferably from 30 to 90 mass%, particularly preferably from 35 to 85 mass%, based on the structural units (100 mass%) based on all monomers, from the viewpoint of the dynamic water repellency.

The proportion of the structural units based on the monomer (c) is preferably from 1 to 60 mass%, more preferably from 3 to 40 mass%, particularly preferably from 5 to 30 mass%, based on the structural units (100 mass%) based on all monomers, from the viewpoint of the dynamic water repellency.

The proportion of the structural units based on the monomer (d) is preferably from 0 to 20 mass% based on the structural units (100 mass%) based on all monomers, and from the viewpoint of the abrasion resistance, it is more preferably from 1 to 10 mass%, particularly preferably from 1 to 5 mass%.

The proportion of the structural units based on the monomer (e) is preferably from 0 to 20 mass%, more preferably from 0 to 10 mass%, based on the structural units (100 mass%) based on all monomers.

In the present invention, the proportion of the structural units based on a monomer is obtained by the NMR analysis and the elemental analysis. In a case where it cannot be obtained by the NMR analysis and the elemental analysis, it may be calculated based on the charged amount of the monomer at the time of the production of a water/oil repellent composition.

The mass average molecular weight (Mw) of the copolymer (A) is at least 15,000, preferably at least 20,000, more preferably at least 30,000. When the mass average molecular weight (Mw) of the copolymer (A) is at least 30,000, good dynamic water repellency and post-air-drying water repellency will be obtained. On the other hand, the mass average molecular weight (Mw) of the copolymer (A) is preferably at most 100,000, particularly preferably at most 90,000, from the viewpoint of the film-forming property and the storage stability. When it is at most 70,000, the mechanical stability of particles of the copolymer and the stability against change in temperature will be high, and the film-forming property will be good, and thus a good performance will be exhibited.

The mass average molecular weight (Mw) of the copolymer (A) is a molecular weight calculated as polystyrene, as measured by gel permeation chromatography (GPC).

### (Surfactant (B))

The surfactant (B) may, for example, be a hydrocarbon type surfactant or a fluorinated surfactant, and each of them may, for example, be an anionic surfactant, a nonionic surfactant, a cationic surfactant, or an amphoteric surfactant.

As the surfactant (B), from the viewpoint of the dispersion stability, it is preferred to use a nonionic surfactant and a cationic surfactant or an amphoteric surfactant in combination or to use an anionic surfactant alone, and it is more preferred to use a nonionic surfactant and a cationic surfactant in combination.

The ratio of the nonionic surfactant to the cationic surfactant (nonionic surfactant/cationic surfactant) is preferably from 97/3 to 40/60 (mass ratio).

In a specific combination of a nonionic surfactant and a cationic surfactant, it is possible to reduce the total amount of the surfactants to at most 5 mass% based on the copolymer (A) (100 mass%), whereby an adverse effect to the water repellency of an article can be reduced.

The nonionic surfactant is preferably at least one member selected from the group consisting of surfactants s¹ to s⁶.

### Surfactant s¹:

Surfactant s¹ is a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant s¹ is preferably a polyoxyalkylene monoalkyl ether, a polyoxyalkylene monoalkenyl ether or a polyoxyalkylene monopolyfluoroalkyl ether. As surfactant s¹, one type may be used alone, or two or more types may be used in combination.

As the alkyl, alkenyl, alkapolyenyl or polyfluoroalkyl group (hereinafter the alkyl, alkenyl, alkapolyenyl and polyfluoroalkyl groups may generally be referred to as a R^{s} group), a C₄₋₂₆ group is preferred. The R^{s} group may be linear or branched. The branched R^{s} group is preferably a secondary alkyl group, a secondary alkenyl group or a secondary alkapolyenyl group. The R^{s} group may have some or all of hydrogen atoms substituted by fluorine atoms.

A specific example of the R^{s} group may, for example, be an octyl group, a dodecyl group, a tetradecyl group, a hexadecyl group, a stearyl group (an octadecyl group), a behenyl group (a docosyl group), an oleyl group (a 9-octadecenyl group), a heptadecylfluorooctyl group, a tridecylfluorohexyl group, a 1H,1H,2H,2H-tridecylfluorooctyl group or a 1H, 1H,2H,2H-nonafluorohexyl group.

The polyoxyalkylene (hereinafter referred to as POA) chain is preferably a chain wherein at least two of a polyoxyethylene (hereinafter referred to as POE) chain and/or a polyoxypropylene (hereinafter referred to as POP) chain are linked. The POA chain may be a chain composed of one type of POA chain or a chain composed of two or more types of POA chains. When it is composed of two or more types of POA chains, the respective POA chains are preferably linked in a block form.

Surfactant s₁ is more preferably a compound (s¹¹).

R¹⁰O[CH₂CH(CH₃)O]ₛ-(CH₂CH₂O)ᵣH (s¹¹)

wherein R¹⁰ is an alkyl group having at least 8 carbon atoms or an alkenyl group having at least 8 carbon atoms, r is an integer of from 5 to 50, and s is an integer of from 0 to 20. R¹⁰ may be one wherein some of hydrogen atoms are substituted by fluorine atoms.

When r is at least 5, the surfactant becomes soluble in water and will be uniformly dissolved in an aqueous medium, whereby the penetrating property of the water/oil repellent composition to an article will be good. When r is at most 50, hydrophilicity will be suppressed, and the water repellency will be good.

When s is at most 20, the surfactant becomes soluble in water and will be uniformly dissolved in an aqueous medium, whereby the penetrating property of the water/oil repellent composition to an article will be good.

In a case where r and s are at least 2, the POE chains and the POP chains will be linked in a block form.

R¹⁰ is preferably linear or branched.

r is preferably an integer of from 10 to 30.

s is preferably an integer of from 0 to 10.

The compound (s¹¹) may, for example, be the following compounds, wherein the POE chains and the POP chains are linked in a block form:

C₁₈H₃₇O[CH₂CH(CH₃)O]₂-(CH₂CH₂O)₃₀H,

C₁₈H₃₅O-(CH₂CH₂O)₃₀H,

C₁₆H₃₃O[CH₂CH(CH₃)O]₅-(CH₂CH₂O)₂₀H,

C₁₂H₂₅O[CH₂CH(CH₃)O]₂-(CH₂CH₂O)₁₅H,

(C₈H₁₇)(CeH₁₃)CHO-(CH₂CH₂O)₁₅H,

C₁₀H₂₁O[CH₂CH(CH₃)O]₂-(CH₂CH₂O)₁₅H,

C₆F₁₃CH₂CH₂O-(CH₂CH₂O)₁₅H,

C₆F₁₃CH₂CH₂O[CH₂CH(CH₃)O]₂-(CH₂CH₂O)₁₅H.

C₄F₉CH₂CH₂O[CH₂CH(CH₃)O]₂-(CH₂CH₂O)₁₅H.

### Surfactant s²:

Surfactant s² is a nonionic surfactant made of a compound having at least one carbon-carbon triple bond and at least one hydroxy group in its molecule.

Surfactant s² is preferably a nonionic surfactant made of a compound having one carbon-carbon triple bond and one or two hydroxy groups in its molecule.

Surfactant s² may have a POA chain in its molecule. The POA chain may be a POE chain, a POP chain, a chain wherein a POE chain and a POP chain are randomly linked, or a chain wherein a POE chain and a POP chain are linked in a block form.

Surfactant s² is preferably compounds (s²¹) to (s²⁴).

HO-C(R¹¹)(R¹²)-C≡C-(CR¹³)(R¹⁴)-OH (s²¹)

HO-(A¹O)ᵤ-(CR¹¹)(R¹²)-C≡C-(CR¹³)(R¹⁴)-(OA²)ᵥOH (s²²)

HO-C(R¹⁵)(R¹⁶)-C=C-H (s²³)

HO-(A³O)_{w}-C(R¹⁵)(R¹⁶)-C≡C-H (s²⁴)

Each of A¹ to A³ is an alkylene group.

Each of u and v is an integer of at least 0, and (u+v) is an integer of at least 1. w is an integer of at least 1.

In a case where each of u, v and w is at least 2, each of A¹ to A³ may be the same or different from one another.

The POA chain is preferably a POE chain, a POP chain or a chain containing a POE chain and a POP chain. The number of repeating units of the POA chain is preferably from 1 to 50.

Each of R¹¹ to R¹⁶ is a hydrogen atom or an alkyl group.

The alkyl group is preferably a C₁₋₁₂ alkyl group, more preferably a C₁₋₄ alkyl group. The alkyl group may, for example, be a methyl group, an ethyl group, a propyl group, a butyl group or an isobutyl group.

The compound (s²²) is preferably a compound (s²⁵): 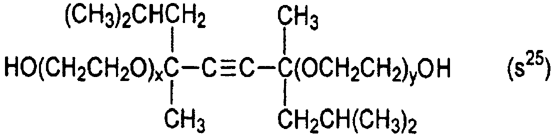 wherein each of x and y is an integer of from 0 to 100.

As the compound (s²⁵), one type may be used alone, or two or more types may be used in combination.

The compound (s²⁵) is preferably a compound wherein x and y are 0, a compound wherein the sum of x and y is from 1 to 4 on average, or a compound wherein the sum of x and y is from 10 to 30 on average.

### Surfactant s³:

Surfactant s³ is a nonionic surfactant made of a compound wherein a POE chain and a POA chain having at least two oxyalkylenes having at least 3 carbon atoms continuously linked, are linked, and both terminals are hydroxy groups.

Such a POA chain is preferably polyoxytetramethylene (hereinafter referred to as POT) and/or a POP chain.

Surfactant s³ is preferably a compound (s³¹) or a compound (s³²):

HO(CH₂CH₂O)_{g1}(C₃H₆O)ₜ(CH₂CH₂O)_{g2}H (s³¹)

HO(CH₂CH₂O)_{g1}(CH₂CH₂CH₂CH₂O)ₜ(CH₂CH₂O)_{g2}H (s³²)

g1 is an integer of from 0 to 200.

t is an integer of from 2 to 100.

g2 is an integer of from 0 to 200.

When g1 is 0, g2 is an integer of at least 2. When g2 is 0, g1 is an integer of at least 2.

-C₃H₆O- may be -CH(CH₃)CH₂O-, -CH₂CH(CH₃)O-, or a mixture of -CH(CH₃)CH₂O- and -CH₂CH(CH₃)O-.

The POA chain is in a block-form.

Surfactant s³ may, for example, be the following compounds:

HO-(CH₂CH₂O)₁₅-(C₃H₆O)₃₅-(CH₂CH₂O)₁₅H,

HO-(CH₂CH₂O)₈-(C₃H₆O)₃₅-(CH₂CH₂O)₈H,

HO-(CH₂CH₂O)₄₅-(C₃H₆O)₁₇-(CH₂CH₂O)₄₅H.

HO-(CH₂CH₂O)₃₄-(CH₂CH₂CH₂CH₂O)₂₈-(CH₂CH₂O)₃₄H.

### Surfactant s⁴:

Surfactant s⁴ is a nonionic surfactant having an amine oxide moiety in its molecule.

Surfactant s⁴ is preferably a compound (s⁴¹)_{:}

(R¹⁷)(R¹⁸)(R¹⁹)N(→O) (s⁴¹)

Each of R¹⁷ to R¹⁹ is a monovalent hydrocarbon group.

In the present invention, a surfactant having an amine oxide (N→O) is regarded as a nonionic surfactant.

As the compound (s⁴¹), one type may be used alone, or two or more types may be used in combination.

The compound (s⁴¹) is preferably a compound (s⁴²) from the viewpoint of the dispersion stability of the copolymer (A).

(R²⁰)(CH₃)₂N(→O) (s⁴²)

R²⁰ is a C₆₋₂₂ alkyl group, a C₆₋₂₂ alkenyl group, a phenyl group having a C₆₋₂₂ alkyl group bonded thereto, a phenyl group having a C₆₋₂₂ alkenyl group bonded thereto, or a C₆₋₁₃ fluoroalkyl group. R²⁰ is preferably a C₈₋₂₂ alkyl group, a C₈₋₂₂ alkenyl group or a C₄₋₉ polyfluoroalkyl group.

The compound (s⁴²) may, for example, be the following compounds:

[H(CH₂)₁₂](CH₃)₂N(→O),

[H(CH₂)₁₄](CH₃)₂N(→O),

[H(CH₂)₁₆](CH₃)₂N(→O),

[H(CH₂)₁₈](CH₃)₂N(→O),

[F(CF₂)₆(CH₂)₂](CH₃)₂N(→O),

[F(CF₂)₄(CH₂)₂](CH₃)₂N(→O).

### Surfactant s⁵_{:}

Surfactant s⁵ is a nonionic surfactant made of a polyoxyethylene mono(substituted phenyl) ether or its condensate.

The substituted phenyl group is preferably a phenyl group substituted by a monovalent hydrocarbon group, more preferably a phenyl group substituted by an alkyl group, an alkenyl group or a styryl group.

Surfactant s⁵ is preferably a condensate of a polyoxyethylenemono(alkylphenyl) ether, a condensate of a polyoxethylenemono(alkenylphenyl) ether, a polyoxyethylenemono(alkylphenyl) ether, a polyoxyethylenemono(alkenylphenyl) ether or a polyoxyethylenemono[(alkyl)(styryl)phenyl] ether.

The polyoxyethylenemono(substituted phenyl) ether or its condensate may, for example, be a formaldehyde condensate of polyoxyethylenemono(nonylphenyl) ether, polyoxyethylenemono(nonylphenyl) ether, polyoxyethylenemono(octylphenyl) ether, polyoxyethylenemono(oleylphenyl) ether, polyoxyethylenemono[(nonyl)(styryl)phenyl] ether or polyoxyethylenemono[(oleyl)(styryl)phenyl] ether.

### Surfactant s⁶:

Surfactant s⁶ is a nonionic surfactant made of a fatty acid ester of a polyol.

The polyol represents glycerol, sorbitan, sorbit, polyglycerin, polyethylene glycol, polyoxyethylene glyceryl ether, polyoxyethylenesorbitan ether or polyoxyethylenesorbit ether.

Surfactant s⁶ may be a 1:1 (molar ratio) ester of stearic acid and polyethylene glycol, a 1:4 (molar ratio) ester of polyoxyethylene sorbit ether and oleic acid, a 1:1 (molar ratio) ester of polyoxyethylene sorbitan ether and stearic acid, a 1:1 (molar ratio) ester of polyoxyethylene sorbitan ether and oleic acid, a 1:1 (molar ratio) ester of dodecanoic acid and sorbitan, a 1:1 or 2:1 (molar ratio) ester of oleic acid and decaglycerol, or a 1:1 or 2:1 (molar ratio) ester of stearic acid and decaglycerol. Surfactant s⁷:

In a case where the surfactant contains a cationic surfactant, such a cationic surfactant is preferably surfactant s⁷.

Surfactant s⁷ is a cationic surfactant in a substituted ammonium salt form.

Surfactant s⁷ is preferably an ammonium salt having at least one hydrogen atom bonded to the nitrogen atom substituted by an alkyl group, an alkenyl group or a POA chain having a terminal hydroxy group, more preferably a compound (s⁷¹):

[(R²¹)₄N⁺]·X⁻ (s⁷¹)

R²¹ is a hydrogen atom, a C₁₋₂₂ alkyl group, a C₂₋₂₂ alkenyl group, a C₁₋₉ fluoroalkyl group or a POA chain having a terminal hydroxy group.

Four R²¹ may be the same or different from one another, provided that the four R²¹ are not simultaneously hydrogen atoms.

R²¹ is preferably at C₆₋₂₂ long chain alkyl group, a C₆₋₂₂ long chain alkenyl group or a C₁₋₉ fluoroalkyl group.

In a case where R²¹ is an alkyl group other than the long chain alkyl group, R²¹ is preferably a methyl group or an ethyl group.

In a case where R²¹ is a POA chain having a terminal hydroxy group, the POA chain is preferably a POE chain.

X⁻ is a counter ion.

X⁻ is preferably a chlorine ion, an ethylsulfuric acid ion or an acetic acid ion.

The compound (s⁷¹) may, for example, be monostearyl trimethylammonium chloride, monostearyldimethylmonoethylammonium ethylsulfate, mono(stearyl)monomethyldi(polyethylene glycol) ammonium chloride, monofluorohexyl trimethylammonium chloride, di(beef tallow alkyl)dimethylammonium chloride or dimethylmonococonutamine acetate.

### Surfactant s⁸_{:}

In a case where the surfactant contains an amphoteric surfactant, such an amphoteric surfactant is preferably surfactant s⁸.

Surfactant s⁸ is an alanine, an imidazolinium betaine, an amidobetaine or an acetic acid betaine.

The hydrophobic group is preferably a C₆₋₂₂ long chain alkyl group, a C₆₋₂₂ long chain alkenyl group or a C₁₋₉ fluoroalkyl group.

Surfactant s⁸ may, for example, be dodecyl betaine, stearyl betaine, dodecylcarboxymethylhydroxyethylimidazolinium betaine, dodecyldimethylaminoacetic acid betaine or a fatty acid amidopropyldimethylaminoacetic acid betaine. Surfactant s⁹:

As the surfactant, surfactant s⁹ may be used.

Surfactant s⁹ is a polymer surfactant made of a block copolymer or a random copolymer of a hydrophilic monomer with a hydrocarbon type hydrophobic monomer and/or a fluorinated hydrophobic monomer, or a hydrophobically modified product of a hydrophilic copolymer.

Surfactant s⁹ may, for example, be a block or random copolymer of polyethylene glycol (meth)acrylate with a long chain alkyl acrylate, a block or random copolymer of polyethylene glycol (meth)acrylate with a fluoroalkyl(meth)acrylate, a block or random copolymer of vinyl acetate with a long chain alkyl vinyl ether, a block or random copolymer of vinyl acetate with a long chain alkyl vinyl ester, a polymer of styrene with maleic anhydride, a condensate of polyvinyl alcohol with stearic acid, a condensate of polyvinyl alcohol with stearyl mercaptan, a condensate of polyallylamine with stearic acid, a condensate of polyethyleneimine with stearyl alcohol, methylcellulose, hydroxypropyl methylcellulose or hydroxyethyl methylcellulose.

Commercial products of surfactant s⁹ include, for example, MP polymer (Product No.: MP-103 or MP-203) manufactured by Kuraray Corporation, SMA resins manufactured by Elf Atochem Inc, METOLOSE manufactured by Shin-Etsu Chemical Co., Ltd., EPOMIN RP manufactured by NIPPON SHOKUBAI Co., Ltd. and Surflon (Product No.: S-381 or S-393) manufactured by AGC Seimi Chemical Co., Ltd.

In a case where the medium is an organic solvent, or the mixing ratio of an organic solvent is large, surfactant s⁹ is preferably surfactant s⁹¹.

Surfactant s⁹¹: A polymer surfactant made of a block copolymer or random copolymer (or a polyfluoroalkyl modified product thereof) of a lipophilic monomer with a fluorinated monomer.

Surfactant s⁹¹ may, for example, be a copolymer of an alkyl acrylate with a fluoroalkyl(meth)acrylate, or a copolymer of an alkyl vinyl ether with a fluoroalkyl vinyl ether.

Commercial products of surfactant s⁹¹ include Surflon (Product No.: S-383 or SC-100 series) manufactured by AGC Seimi Chemical Co., Ltd.

As a combination of surfactants (B), from the viewpoint of excellent water repellency and durability of a water/oil repellent composition, and from the viewpoint of the stability of the obtained emulsion, a combination of surfactants s¹, s² and s⁷, a combination of surfactants s¹, s³ and s⁷ or a combination of surfactants s¹, s², s³ and s⁷ is preferred, and such a combination wherein the surfactant s⁷ is a compound (s⁷¹) is more preferred.

The total amount of surfactants (B) is preferably from 1 to 10 parts by mass, more preferably from 1 to 7 parts by mass, particularly preferably from 1 to 5 parts by mass, per 100 parts by mass of the copolymer (A).

### (Medium (C))

The medium (C) comprises water and a propylene glycol type solvent (hereinafter referred to as PG type solvent), and it contains another solvent as the case requires.

The PG type solvent may, for example, be propylene glycol, dipropylene glycol (hereinafter referred to as DPG), dipropylene glycol monomethyl ether (hereinafter referred to as DPGMME), propylene glycol monomethyl ether acetate, propylene glycol monomethyl ether, propylene glycol monoethyl ether, propylene glycol dimethyl ether, dipropylene glycol dimethyl ether, dipropylene glycol monoethyl ether, tripropylene glycol (hereinafter referred to as TPG), tripropylene glycol monomethyl ether or polypropylene glycol. The PG type solvent is preferably DPG, DPGMME or TPG, particularly preferably DPG or DPGMME.

The amount of water is preferably from 30 to 120,000 parts by mass, more preferably from 70 to 1000,000 parts by mass, particularly preferably from 120 to 80,000 parts by mass, per 100 parts by mass of the copolymer (A).

The amount of the PG type solvent is from 35 to 80 parts by mass, preferably from 35 to 75 parts by mass, more preferably from 40 to 70 parts by mass, per 100 parts by mass of the copolymer (A). When the amount of the PG type solvent is at least 35 parts by mass, the mechanical stability of the particles of the copolymer and the stability against change in temperature will be high, and the dynamic water repellency will be good. When the amount of the PG type solvent is at most 80 parts by mass, the abrasion resistance will be good.

The above another medium may, for example, be an alcohol, another glycol, another glycol ether, a halogenated compound, a hydrocarbon, a ketone, an ester, an ether, a nitrogen compound, a sulfur compound, an inorganic solvent or an organic acid.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, 3-heptanol, 1,4-butanediol or 3-methoxy-3-methylbutanol.

The above another glycol and another glycol ether may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate or hexylene glycol.

The halogenated compound may, for example, be a halogenated hydrocarbon or a halogenated ether.

The halogenated hydrocarbon may, for example, be a hydrochlorofluorocarbon, a hydrofluorocarbon or a hydrobromocarbon.

The halogenated ether may, for example, be a hydrofluoroether.

The hydrofluoroether may, for example, be a separation-type hydrofluoroether or a non-separation-type hydrofluoroether. The separation-type hydrofluoroether is a compound wherein a R^{F} group or a perfluoroalkylene group, and an alkyl group or an alkylene group, are bonded via an etheric oxygen atom. The non-separation-type hydrofluoroether is a hydrofluoroether containing a partially fluorinated alkyl or alkylene group.

The hydrocarbon may, for example, be an aliphatic hydrocarbon, an alicyclic hydrocarbon or an aromatic hydrocarbon.

The aliphatic hydrocarbon may, for example, be pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane or hexadecane.

The alicyclic hydrocarbon may, for example, be cyclopentane, methylcyclopentane, cyclohexane, methylcyclohexane or ethylcyclohexane.

The aromatic hydrocarbon may, for example, be benzene, toluene or xylene.

The ketone may, for example, be acetone, methyl ethyl ketone, 2-pentanone, 3-pentanone, 2-hexanone or methyl isobutyl ketone.

The ester may, for example, be methyl acetate, ethyl acetate, butyl acetate, methyl propionate, methyl lactate, ethyl lactate or pentyl lactate.

The ether may, for example, be diisopropyl ether, dioxane or tetrahydrofuran (hereinafter referred to as THF).

The nitrogen compound may, for example, be pyridine, N,N-dimethylformamide, N,N-dimethylacetamide or N-methylpyrrolidone.

The sulfur compound may, for example, be dimethylsulfoxide or sulfolane.

The inorganic solvent may, for example, be liquefied carbon dioxide.

The organic acid may, for example, be acetic acid, propionic acid, malic acid or lactic acid.

The proportion of such another medium is preferably at most 50 mass%, more preferably at most 30 mass%, particularly preferably from 0 to 15 parts by mass, based on 100 mass% of the medium (C).

### (Additives)

Additives are usually added to a composition containing the copolymer (A) after production of the copolymer (A) by polymerization of monomers.

The additives include, for example, a penetrant, a defoamer, a water-absorbing agent, an antistatic agent, an antistatic polymer, an anticrease agent, a texture-adjusting agent, a film-forming assistant, a water-soluble polymer (such as polyacrylamide or polyvinyl alcohol), a thermosetting agent (such as a melamine resin, a urethane resin, a triazine ring-containing compound or an isocyanate-type compound), an epoxy curing agent (such as isophthalic acid dihydrazide, adipic acid dihydrazide, sebacic acid dihydrazide, dodecanedioic acid dihydrazide, 1,6-hexamethylenebis(N,N-dimethylsemicarbazide), 1,1,1',1'-tetramethyl-4,4'-(methylene-di-p-phenylene) disemicarbazide or spiroglycol), a thermosetting catalyst, a crosslinking catalyst, a synthetic resin, a fiber-stabilizer and inorganic fine particles.

The water/oil repellent composition of the present invention or a treating liquid containing such a composition preferably contains a curing agent such as a thermosetting agent. In such a case, it preferably also contains a curing catalyst such as a thermosetting catalyst or a crosslinking catalyst at the same time. When such a curing agent is employed, the total amount of the curing agent and the curing catalyst is preferably from 10 to 200 parts by mass per 100 parts by mass of the copolymer (A).

Further, the water/oil repellent composition of the present invention may contain a copolymer capable of exhibiting water repellency and/or oil repellency (e.g. a commercially available water repellent, a commercially available oil repellent, a commercially available water/oil repellent or a commercially available SR (soil release) agent) other than the copolymer (A), or a water-repellent compound having no fluorine atom, as the case requires. The water-repellent compound having no fluorine atom may, for example, be a paraffin type compound, an aliphatic amide type compound, an alkylethylene urea compound or a silicone compound.

### (Method for producing water/oil repellent composition)

The water/oil repellent composition of the present invention is produced by polymerizing a monomer mixture comprising the above monomer (a), the above monomer (b) and the above monomer (c) in the presence of a polymerization initiator to prepare a copolymer (A), and adjusting a surfactant (B) and a medium (C) at the same time as or after the preparation. Particularly, a method wherein the copolymer (A) is produced in the presence of the surfactant (B) and the medium (C), or a method wherein the copolymer (A) is prepared in the presence of a part of the surfactant (B) and a part of the medium (C), and then, the remaining surfactant (B) and the remaining medium (C) are added to the obtained composition to obtain the water/oil repellent composition of the present invention is preferred.

That is, the water/oil repellent composition of the present invention is preferably produced by the following method.

A method which comprises polymerizing a monomer mixture comprising the monomer (a), the monomer (b) and the monomer (c) and as the case requires, containing the monomer (d) and the monomer (e), in the presence of the surfactant (b) and a polymerization initiator to obtain a dispersion or an emulsion of the copolymer (A), and then, as the case requires, adding the medium (C), the surfactant (B) and additives.

Further, the following method for producing a water/oil repellent composition is also the production method of the present invention.

A method for producing a water/oil repellent composition, which comprises polymerizing a monomer mixture comprising the monomer (a), the monomer (b) and the monomer (c) in a medium (C) in the presence of a surfactant (B) and a polymerization initiator to obtain a copolymer (A), wherein the medium (C) comprises water and a propylene glycol type solvent, and the amount of the propylene glycol type solvent is from 35 to 80 parts by mass per 100 parts by mass of the monomer mixture.

The polymerization method may, for example, be a dispersion polymerization method, an emulsion polymerization method or a suspension polymerization method, and emulsion polymerization is preferred. Further, it may be one-stage polymerization or multistage polymerization.

The method for producing a water/oil repellent composition is preferably a method wherein a monomer mixture comprising the monomer (a), the monomer (b) and the monomer (c) and further containing the monomer (d) and the monomer (e) as the case requires, is polymerized by emulsion polymerization in the medium (C) in the presence of the surfactant (B) and a polymerization initiator to obtain an emulsion of the copolymer (A).

With a view to improving the yield of the copolymer, it is preferred to pre-emulsify a mixture comprising the monomer mixture, the surfactant (B) and the medium (C), prior to the emulsion polymerization. For example, a mixture comprising the monomer mixture, the surfactant (B) and the medium (C) is mixed and dispersed by a homomixer or a high pressure emulsifier.

The polymerization initiator may, for example, be a thermal polymerization initiator, a photopolymerization initiator, a radiation polymerization initiator, a radical polymerization initiator or an ionic polymerization initiator, and a water-soluble or oil-soluble radical polymerization initiator is preferred.

As the radical polymerization initiator, a common initiator such as an azo type polymerization initiator, a peroxide type polymerization initiator or a redox type initiator is employed depending upon the polymerization temperature. As the radical polymerization initiator, an azo type compound is particularly preferred, and in a case where polymerization is carried out in the medium (C), a salt of an azo type compound is more preferred. The polymerization temperature is preferably from 20 to 150°C.

The amount of the polymerization initiator is preferably from 0.1 to 5 parts by mass, more preferably from 0.1 to 3 parts by mass, per 100 parts by mass of the monomer mixture.

At the time of polymerization of the monomer mixture, a molecular weight-controlling agent may be employed. The molecular weight controlling agent is preferably an aromatic compound, a mercapto alcohol or a mercaptan, particularly preferably an alkylmercaptan. The molecular weight-controlling agent may, for example, be mercaptoethanol, n-octylmercaptan, n-dodecylmercaptan, t-dodecylmercaptan, stearylmercaptan or α-methylstyrene dimer (CH₂=C(Ph)CH₂C(CH₃)₂Ph wherein Ph is a phenyl group).

The amount of the molecular weight-controlling agent is preferably from 0 to 5 parts by mass, more preferably from 0 to 3 parts by mass, per 100 parts by mass of the monomer mixture.

Otherwise, the monomer mixture may be polymerized in the presence of a polyfunctional mercapto compound such as diethylene glycol bis(3-mercaptobutyrate), pentaerythritol tetrakis(3-mercaptobutyrate), 2,4,6-trimercaptotriazine or 1,3,5-tris(3-mercaptobutyloxyethyl)-1,3,5-triazine-2,4,6(1H,3H,5H)-trione.

The proportion of the total monomers (a), (b) and (c) is preferably from 80 to 100 mass%, more preferably from 85 to 100 mass%, particularly preferably from 90 to 100 mass%, based on the monomer mixture (100 mass%) from the viewpoint of the dynamic water repellency.

From the viewpoint of the dynamic water repellency, the proportion of the monomer (a) is preferably from 1 to 50 mass%, more preferably from 5 to 30 mass%, particularly preferably from 10 to 25 mass%, based on the monomer mixture (100 mass%).

From the viewpoint of the dynamic water repellency, the proportion of the monomer (b) is preferably from 30 to 98 mass%, more preferably from 30 to 90 mass%, particularly preferably from 35 to 85 mass%, based on the monomer mixture (100 mass%).

From the viewpoint of the dynamic water repellency, the proportion of the monomer (c) is preferably from 1 to 60 mass%, more preferably from 3 to 40 mass%, particularly preferably from 5 to 30 mass%, based on the monomer mixture (100 mass%).

The proportion of the monomer (d) is preferably from 0 to 20 mass% based on the monomer mixture (100 mass%), and from the viewpoint of the abrasion durability, it is more preferably from 1 to 10 mass%, particularly preferably from 1 to 5 mass%.

The proportion of the monomer (e) is preferably from 0 to 20 mass%, more preferably from 0 to 10 mass%, based on the monomer mixture (100 mass%).

The total amount of the surfactant (B) is preferably from 1 to 10 parts by mass, more preferably from 1 to 7 parts by mass, per 100 parts by mass of the monomer mixture.

The medium (C) comprises water and a PG type solvent, and as the case requires, it further contains another medium.

The amount of the PG type solvent is from 35 to 80 parts by mass, preferably from 35 to 75 parts by mass, more preferably from 35 to 70 parts by mass, per 100 parts by mass of the monomer mixture. When the amount of the PG type solvent is at least 35 parts by mass, the mechanical stability of the particles of the copolymer and the stability against change in temperature will be high, and the dynamic water repellency will be good. When the amount of the PG type solvent is at most 80 parts by mass, the abrasion durability will be good. When the water/oil repellent composition is produced, the amount of water is preferably from 60 to 400 parts by mass, more preferably from 80 to 350 parts by mass, particularly preferably 100 to 300 parts by mass, per 100 parts by mass of the monomer mixture.

The mass ratio (water/PG type solvent) of water to the PG type solvent is preferably from 2 to 5, more preferably from 2 to 4.5, particularly preferably from 2 to 4. When the water/PG type solvent ratio is at least 2, the emulsified state will become good and the particle size will become small, whereby it is possible to obtain an ideal processing state and the abrasion durability will be good. When the water/PG type solvent ratio is at most 5, the compatibility of the monomers will be good and homogeneous particles will be produced, whereby the dynamic water repellency will be good.

In the water/oil repellent composition of the present invention, it is preferred that the copolymer (A) is dispersed in the form of particles in the medium. The average particle size of the copolymer (A) is preferably from 10 to 200 nm, more preferably from 50 to 180 nm, particularly preferably from 80 to 150 nm. When the average particle size exceeds 200 nm, the stability may be poor. When the average particle size is at most 180 nm, the dynamic water repellency will be better, and when the average particle size is at most 150 nm, the stability will be better.

The average particle size of the copolymer (A) is measured by means of a dynamic light-scattering apparatus.

Immediately after the production of the water/oil repellent composition, the solid content concentration of the emulsion is preferably from 20 to 40 mass%, based on the emulsion (100 mass%). Here, the solid content concentration is a concentration including an emulsifier in addition to the copolymer (A). The content of the copolymer (A) in the emulsion is preferably from 18 to 40 mass% immediately after the production of the water/oil repellent composition. Further, immediately after the production of the water/oil repellent composition and before a treating liquid is obtained from it, a surfactant or a medium may be added to adjust the composition. Such surfactant and medium for composition adjustment may be the surfactant (B) and the medium (C), or a part of them. For example, water may singly be added to adjust the composition. Further, the content of the copolymer (A) after the composition adjustment may fall below the above range. Further, the above additives may be added for the composition adjustment.

The solid content concentration of the treating liquid which contains the water/oil repellent composition of the present invention and which is used for treating an article is preferably from 0.2 to 5 mass%. Further, it is preferred that when the water/oil repellent composition is diluted, the above additives are added at the same time as the case requires to obtain the treating liquid.

The solid content concentrations of the emulsion, the water/oil repellent composition and the treating liquid are calculated from the mass of the emulsion, the water/oil repellent composition and the treating liquid before heating, respectively, and the mass after drying for 4 hours by a counter current canal dryer at 120°C.

In the water/oil repellent composition and the method for its production of the present invention as described in the foregoing, the medium (C) contains water and a specific PG type solvent at a specific ratio, whereby it is possible to impart sufficient dynamic water repellency to the surface of an article. Reasons for the performance improvement by the medium (C) containing a specific PG type solvent may be considered as follows.
(i) Solubility of the monomer (b) is improved, whereby transfer of monomers during polymerization proceeds sufficiently, and it is thereby possible to obtain the copolymer (A) having a relatively uniform composition of the structural units.
(ii) The particle size of the copolymer (A) in the emulsion becomes relatively small, whereby uniform adhesion to a substrate will become possible.
(iii) The amount of the PG type solvent maintained in the particles of the copolymer (A) in the emulsion is increased, and the molecular weight becomes small, whereby the film forming property will be improved.

Further, in the water/oil repellent composition and the method for its production of the present invention, the medium (C) contains water and a specific PG type solvent at a specific ratio, whereby it is possible to control the particles of the copolymer contained in the water/oil repellent composition to be within a preferred range, and the stability of the particles will be improved.

Further, by the water-oil repellent composition of the present invention, the content (content in a case where the solid content concentration is 20%) of perfluorooctanoic acid (PFOA) and perfluorooctanesulfonic acid (PFOS), and their precursors and analogs, of which the effects on the environment are pointed out, can be reduced to a level of not higher than the detection limit as an analytical value of LC-MS/MS by the method disclosed in WO2009/081822.

### <Method for treating article>

The method for treating an article of the present invention is characterized by treating an article with a treating liquid containing the water/oil repellent composition of the present invention.

Articles to be treated include, for example, fibers (natural fibers, synthetic fibers, mixed fibers, etc.), various fiber products, nonwoven fabrics, resins, paper, leather, metals, stones, concrete, gypsum and glass.

The treating method may, for example, be a method of coating an article with a coating liquid containing the water/oil repellent composition by a known coating method, followed by drying, or a method of impregnating an article with a coating liquid containing the water/oil repellent composition, followed by drying.

After the method for treating an article of the present invention is carried out, antistatic finish, softening finish, antibacterial finish, deodorant finish or waterproofing finish etc. may further be carried out.

The waterproofing finish may be processing to provide a waterproofing film. The waterproofing film may, for example, be a porous film made of an urethane resin or an acrylic resin, a non-porous film made of an urethane resin or an acrylic resin, a polytetrafluoroethylene film or a moisture-proofing film made of a combination thereof.

By treating an article by means of the water/oil repellent composition of the present invention, it is possible to impart high-quality water/oil repellency to the article. Further, it is possible to maintain the performance at the initial stage of the processing stably without substantial deterioration of the performance by abrasion or washing. Further, when paper is treated, it is possible to impart an excellent sizing property and water/oil repellency to the paper even under a low temperature drying condition. In a case where it is applied to the surface of a resin, glass or a metal, it is possible to form a water/oil repellent coating film which is excellent in the adhesion to the article and which is excellent in the film-forming property.

### EXAMPLES

Now, the present invention will be described in detail with reference to Examples, but it should be understood that the present invention is by no means thereby restricted.

Examples 3, 5 and 6 are Working Examples of the present invention, and Examples 1, 2, 4, 7, 8 and 9 are Comparative Examples.

### <Physical properties of copolymer>

With respect to a copolymer recovered by the following recovery method, its molecular weight was measured.

### (Recovery method)

6 g of an emulsion was dropped into 60 g of 2-propanol (hereinafter referred to as IPA), followed by stirring to precipitate solid. After carrying out centrifugal separation at 3,000 rpm for 5 minutes, the obtained solid was decanted. 12 g of IPA was again added, followed by thorough stirring. After carrying out centrifugal separation at 3,000 rpm for 5 minutes, the obtained solid was separated from the supernatant, followed by vacuum drying at 35°C overnight to obtain a copolymer.

### (Molecular weight)

The recovered copolymer was made into 0.5 mass% THF solution, which was passed through a 0.45 µm filter to obtain a sample. With respect to the sample, the mass average molecular weight (Mw) was measured. The condition for the measurement was as follows.
Apparatus: HLC-8220GPC manufactured by TOSOH CORPORATION
Column: A column composed of four types of columns i.e. TSKgel superHZ4000, superHZ3000, superHZ2500 and superHZ2000 which are connected in series.
Measuring temperature: 40°C
Injected amount: 40 µL
Outflow rate: 0.35 mL/min
Eluent: THF
Standard sample: EasiCal PS-2 manufactured by Polymer Laboratories

### (Average particle size)

The emulsion was diluted by 0.05 mass% with distilled water which had been passed through a 50 µm filter to obtain a sample. The average particle size of the sample was measured by dynamic light scattering method by means of a zeta potential/particle size measurement system (ELS-Z, manufactured by Otsuka Electronics Co., Ltd.).

### <Evaluation of test cloth>

### (Water repellency)

With respect to a test cloth, the water repellency was evaluated in accordance with the spray test in JIS L1092-1992. The water repellency is represented by five grades of from 1 to 5. Here, the higher the grade number, the better the water repellency. One with grade 3 or higher is regarded as exhibiting water repellency. A grade having +(-) attached shows that the property is slightly better (worse) than the standard property of that grade.

### (Washing durability)

With respect to a test cloth, washing was repeated 5 times or 20 times in accordance with the water washing method in JIS L0217 Appendix 103. After the washing, it was dried in air overnight in a room having a room temperature of 25°C under a humidity of 60%, whereupon the water repellency was evaluated.

### (Oil repellency)

With respect to a test cloth, the oil repellency was evaluated in accordance with the test method in AATCC-TM118-1966. The oil repellency is represented by grades shown in Table 1. A grade having +(-) attached, shows that the property is slightly better (worse).

**TABLE 1**

| Oil repellency No. | Test solution | Surface tension |
|---|---|---|
| | | mN/m (25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | 65 Parts of nujol/ 35 parts of hexadecane | 29.6 |
| 1 | Nujol | 31.2 |
| 0 | Less than 1 | - |

### (Washing durability)

With respect to a test cloth, washing was repeated 5 times or 20 times in accordance with the water washing method in JIS L0217 Appendix 103. After the washing, it was dried in air overnight in a room having a room temperature of 25°C under a humidity of 60%, whereupon the oil repellency was evaluated.

### (Dynamic water repellency)

With respect to a test cloth, in accordance with the method (Bundesmann test) disclosed in JIS L1092 7.3A method (2009), a rainfall test was carried out under such conditions that the amount of rainfall was 100 cc/min, the water temperature of rainfall was 20°C and the time for rainfall was 10 minutes, whereupon the water repellency was evaluated. The water repellency was represented by five grades of from 1 to 5. Here, the larger the grade number, the better the water repellency. One with grade 3 or higher is regarded as exhibiting water repellency. A grade having +(-) attached, shows that the property is slightly better (worse). Further, "<1" represents "less than 1".

### (Washing durability)

With respect to a test cloth, washing was repeated 5 times in accordance with the water washing method in JIS L0217 Appendix 103. After the washing, it was dried in air overnight in a room having a room temperature of 25°C under a humidity of 50%, whereupon the dynamic water repellency was evaluated.

### (Stability to foreign substances)

In 250 g of a water/oil repellent composition, Sumikaron Red SE-RPD (manufactured by Sumika Chemtex Co., Ltd.) as a disperse dye was added so that the concentration became 0.05 g/L. This liquid was heated to 30°C in a warm bath and stirred at 3,000 rpm for 5 minutes by means of a homomixer (Biomixer, manufactured by NIHONSEIKI KAISHA LTD.), followed by filtration by a brown doeskin cloth. A trace remaining on the surface of the doeskin cloth was observed. One having no trace was taken as 5 points, and the evaluation was carried out in five grades down to 1 point. Here, the lower the point, the worse the stability to foreign substances.

The stability to foreign substances was evaluated in the same manner by changing Sumikaron Red SE-RPD (a disperse dye) to Nylosan Blue N-BLN (an acid dye, manufactured by Clariant).

### (Freeze/thaw stability)

A water/oil repellent composition was diluted so that the concentration became 20 mass%. 20 g of each composition was placed in an environmental test machine (low-temperature isothermal machine EY-101, manufactured by TABAI ESPEC CORP.), and still standing at -5°C for 12 hours and then at 23°C for 12 hours was repeated 2 times, and then change in visual appearance was observed. Here, each of raising temperature and cooling was carried out over 1 hour. "x" represents that separation or formation of scum was remarkable, "Δ" represents that change in visual appearance was slightly observed, and "O" represents that no change was observed.

### (Abbreviations)

### Monomer (a):

C6FMA: C₆F₁₃C₂H₄OC(O)C(CH₃)=CH₂

### Monomer (b):

BeA: Behenyl acrylate

### Monomer (c):

VCM: Vinyl chloride

### Monomer (d):

HEMA: 2-Hydroxyethyl methacrylate
NMAN: N-Methylol acrylamide

### Molecular weight-controlling agent:

n-DoSH: n-Dodecylmercaptan

### Surfactant s¹:

PEO-20: 10 Mass% aqueous solution of polyoxyethylene oleyl ether (Emulgen E430 manufactured by Kao Corporation, about 26 mol adduct of ethylene oxide) Surfactant s³:
P-204: 10 Mass% aqueous solution of poly(oxyethylene/oxypropylene)glycol (PRONONE 204 manufactured by NOF Corporation, proportion of oxyethylene groups: 40 mass%)

### Surfactant s⁷:

TMAC: 10 Mass% aqueous solution of trimethylammonium chloride (ARQUAD 18-63 manufactured by Lion Corporation)

### Medium (C):

Water: Deionized water
DPG: Dipropylene glycol
DPGMME: Dipropylene glycol monomethyl ether
DEA: Diethylene glycol monomethyl ether acetate
MMB: 3-Methoxy-3-methylbutanol (Solfit, manufactured by Kuraray Co., Ltd.) Polymerization initiator:
VA-061 A: 10 Mass% aqueous solution of an acetate of 2,2'-azobis[2-(2-imidazolin-2-yl)propane] (VA-061 manufactured by Wako Pure Chemical Industries, Ltd.)

### [Example 1]

A glass beaker was charged with 35.7 g of C6FMA, 144.6 g of BeA, 1.2 g of HEMA, 8.9 g of NMAM, 2.4 g of n-DOSH, 60.0 g of PEO-20, 12.0 g of P204, 12.0 g of TMAC, 276.4 g of water and 72.3 g of DPG and was heated at 60°C for 30 minutes, followed by mixing by means of a homomixer (Biomixer, manufactured by NIHONSEIKI KAISHA LTD.) to obtain a mixed liquid.

The obtained mixed liquid was treated at 40 MPa by means of a high pressure emulsifying machine (Mini-Lab manufactured by APV Rannie) while maintaining the temperature at 60°C to obtain an emulsified liquid. The obtained emulsified liquid was put into a stainless-steel reactor and cooled until the temperature became 40°C or lower. 24.0 g of VA-061A was added thereto, and the vapor phase was substituted by nitrogen, and then 50.6 g of VCM was introduced thereto and a polymerization reaction was carried out at 60°C for 15 hours with stirring, to obtain an emulsion of a copolymer. The proportions of respective monomers in the monomer mixture, the composition of the medium, the solid content, the molecular weight of the copolymer and the average particle size are shown in Table 3.

### [Example 2 to 9]

Emulsions of copolymers were obtained in the same manner as in Example 1 except that the charged amounts of the respective starting materials were changed to the amounts shown in Table 2. The proportions of respective monomers in the monomer mixture, the composition of the medium, the solid content, the molecular weight of the copolymer and the average particle size are shown in Table 3.

**[Table 2]**

| Charged amount | | Examples | | | | | | | | |
|---|---|---|---|---|---|---|---|---|---|---|
| | | 1 | 2 | 3 | 4 | 5 | 6 | 7 | 8 | 9 |
| (a) | C6FMA | 35.7 | 32.3 | 32.3 | 35.7 | 33.9 | 32.3 | 29.6 | 35.7 | 32.1 |
| (b) | BeA | 144.6 | 131 | 131 | 144.6 | 137.5 | 131 | 119.8 | 144.6 | 130.1 |
| (c) | VCM | 50.6 | 45.9 | 45.9 | 50.6 | 48.1 | 45.9 | 41.9 | 50.6 | 45.5 |
| (d) | HEMA | 1.2 | 1.1 | 1.1 | 1.2 | 1.1 | 1.1 | 1 | 1.2 | 1.1 |
| (d) | NMAM | 8.9 | 8.1 | 8.1 | 8.9 | 8.5 | 8.1 | 7.4 | 8.9 | 8.6 |
| - | n-DOSH | 2.4 | 2.2 | 2.2 | 2.4 | 2.3 | 2.2 | 2 | 2.4 | 2.2 |
| s¹ | PEO-20 | 60 | 55 | 55 | 60 | 57 | 55 | 50 | 60 | 54.2 |
| s³ | P204 | 12 | 11 | 11 | 12 | 11 | 11 | 10 | 12 | 10.8 |
| s⁷ | TMAC | 12 | 11 | 11 | 12 | 11 | 11 | 10 | 12 | 21.7 |
| (C) | Water | 276.4 | 315.2 | 249.2 | 276.4 | 263.3 | 249.2 | 229 | 276.4 | 317.9 |
| (C) | DPG | 72.3 | 65.5 | 131 | | | | | | |
| (C) | DPGMME | | | | 72.3 | 103.1 | 131 | 179.7 | | |
| (C) | DEA | | | | | | | | 72.3 | |
| (C) | MMB | | | | | | | | | 65 |
| - | VA061-A | 24 | 22 | 22 | 24 | 23 | 22 | 20 | 24 | 10.8 |
| Total | | 700 | 700 | 700 | 700 | 700 | 700 | 700 | 700 | 700 |

**[Table 3]**

| | Examples | | | | | | | | |
|---|---|---|---|---|---|---|---|---|---|
| | 1 | 2 | 3 | 4 | 5 | 6 | 7 | 8 | 9 |
| Proportion (mass%) of monomer based on monomer mixture (100 mass%) | | | | | | | | | |
| (a) | 14.8 | 14.8 | 14.8 | 14.8 | 14.8 | 14.8 | 14.8 | 14.8 | 14.8 |
| (b) | 60 | 60 | 60 | 60 | 60 | 60 | 60 | 60 | 60 |
| (c) | 21 | 21 | 21 | 21 | 21 | 21 | 21 | 21 | 21 |
| (d) | 4.2 | 4.2 | 4.2 | 4.2 | 4.2 | 4.2 | 4.2 | 4.2 | 4.2 |
| (a)+(b)+(c) | 95.8 | 95.8 | 95.8 | 95.8 | 95.8 | 95.8 | 95.8 | 95.8 | 95.8 |

| Amount (parts by mass) per 100 parts by mass of monomer mixture | | | | | | | | | |
|---|---|---|---|---|---|---|---|---|---|
| Water | 155 | 185 | 155 | 155 | 155 | 155 | 155 | 155 | 175 |
| PG type solvent | 30 | 30 | 60 | 30 | 45 | 60 | 90 | - | - |
| Water/PG type solvent | 5.2 | 6.2 | 2.6 | 5.2 | 3.4 | 2.6 | 1.7 | - | - |
| Solid content (mass%) | 33.4 | 30.6 | 30.6 | 33.5 | 31.5 | 30.2 | 28.4 | 33.4 | - |
| Mw | 74,000 | | | 55,000 | | 52,000 | | | |
| Average particle size (nm) | 179.5 | 160.8 | 124.1 | 188.2 | 135.5 | 140.6 | 235.3 | 201.8 | - |

### <Evaluation of test cloth>

The emulsion of a copolymer in each of Examples 1 to 9 was diluted with distilled water to adjust the solid content concentration to be 1.0 mass%, and then a trimethylolmelamine resin (BECKAMINE M-3 manufactured by DIC Corporation) as a thermosetting agent and an organic amine salt catalyst (Catalyst ACX manufactured by DIC Corporation) as a thermosetting catalyst were added so that the respective concentrations became 0.3 mass%, and further, a blocked isocyanate (Meikanate TP-10 manufactured Meisei Chemical Works, Ltd.) as an adjuvant for combined use was added so that the concentration became 0.75 mass% to obtain a water/oil repellent composition.

In the water/oil repellent composition, a dyed nylon cloth was dipped and squeezed so that the wet pickup became 42 mass%. Further, in the water/oil repellent composition, a dyed polyester cloth was dipped and squeezed so that the wet pickup became 95 mass%. These wet cloths were dried at 110°C for 90 seconds and then dried at 170°C for 60 seconds to obtain test cloths. With respect to the test cloth, the water repellency, the oil repellency and the dynamic water repellency were evaluated.

When the water/oil repellent composition of Example 9 was used, the mechanical stability (single) was evaluated as from 2 to 3, which means a sufficient stability could not be obtained. The results of Examples 1 to 8 are shown in Table 4.

**[Table 4]**

| Substrate | Test | Repeat count of washing | Examples | | | | | | | |
|---|---|---|---|---|---|---|---|---|---|---|
| | | | 1 | 2 | 3 | 4 | 5 | 6 | 7 | 8 |
| Ny | Water repellency | 0 | 5 | 5 | 5 | 5 | 5 | 5 | 5 | 4 |
| | | 5 | 5- | 5 | 5 | 5 | 5 | 5 | 3 | 1 |
| | | 20 | 3+ | 3 | 4- | 3 | 3+ | 3+ | 1+ | 0 |
| | | 50 | 2+ | 2 | 4- | 2 | 3 | 3 | 1 | 0 |
| | Oil repellency | 0 | 2+ | 2+ | 2 | 2 | 2 | 2 | 2- | 2- |
| | | 5 | 1- | 1- | 2- | 1 | 2- | 1 | 1- | 0 |
| | | 20 | 1- | 1- | 1 | 1- | 1- | 1- | 0 | 0 |
| PET | Water repellency | 0 | 5 | 5 | 5 | 5 | 5 | 5 | 5 | 5 |
| | | 5 | 5 | 5 | 5 | 5 | 5 | 5 | 5 | 5 |
| | | 20 | 5 | 5 | 5 | 5 | 5 | 5 | 3+ | 3+ |
| | Oil repellency | 0 | 3- | 3 | 2+ | 2+ | 2+ | 2+ | 1+ | 1+ |
| | | 5 | 1+ | 1+ | 1- | 0 | 0 | 0 | 0 | 0 |
| | | 20 | 1 | 1 | 0 | 0 | 0 | 0 | 0 | 0 |
| Ny | Bundesmann test | 0 | 5- | 4.5 | 5 | 5- | 5 | 5 | 5 | 2.5 |
| | | 5 | 4- | 4- | 4 | 4- | 4+ | 4+ | 2+ | 1 |
| | | 20 | 3 | 3 | 3.5 | 3 | 3.5 | 3.5 | <1 | <1 |
| Mechanical strength | Single | - | 2.5 | 2.5 | 3.5 | 2 | 4 | 4 | 4 | 1.5 |
| | Acid dye | - | 2 | 1.5 | 2 | 1.5 | 2 | 4 | 4 | 1 |
| | Disperse dye | - | 2 | 2 | 2 | 1 | 2 | 3.5 | 3.5 | 1 |
| Freeze/thaw stability 1 cycle | | - | O | O | O | Δ | O | O | × | × |

| | | | | | | | | | | |
|---|---|---|---|---|---|---|---|---|---|---|
| Ny: nylon cloth, PET: polyester cloth | | | | | | | | | | |

### INDUSTRIAL APPLICABILITY

The water/oil repellent composition of the present invention is useful as a water/oil repellent agent for e.g. fiber products (clothing (sports wears, coats, jumpers, work clothes, uniforms, etc.), bags, industrial materials, etc.), nonwoven fabrics, leather products, stone materials, concrete building materials, etc. Further, it is useful as a coating agent for filtration materials or as a surface protective agent. Further, it is useful also for an application wherein it is mixed with e.g. polypropylene or nylon, followed by molding or forming into fibers to impart water/oil repellency.

The entire disclosure of Japanese Patent Application No. 2009-294368 filed on December 25, 2009 including specification, claims and summary is incorporated herein by reference in its entirety.

## Claims

1. A water/oil repellent composition comprising a copolymer (A) having structural units based on the following monomer (a), structural units based on the following monomer (b) and structural units based on the following monomer (c), a surfactant (B), and a medium (C), wherein the medium (C) comprises water and a propylene glycol type solvent, and the amount of the propylene glycol type solvent is from 35 to 80 parts by mass per 100 parts by mass of the copolymer (A):
monomer (a): a monomer having a C₁₋₆ polyfluoroalkyl group;
monomer (b): a (meth)acrylate having no polyfluoroalkyl group and having a C₂₀₋₃₀ alkyl group; and
monomer (c): a halogenated olefin.

2. The water/oil repellent composition according to Claim 1, wherein the propylene glycol type solvent is dipropylene glycol or dipropylene glycol monomethyl ether.

3. The water/oil repellent composition according to Claim 1 or 2, wherein the copolymer (A) further has structural units based on the following monomer (d):
monomer (d): a monomer having no polyfluoroalkyl group and having a polar group or a crosslinkable functional group.

4. The water/oil repellent composition according to any one of Claims 1 to 3, wherein fine particles of the copolymer (A) are dispersed in the medium (C).

5. The water/oil repellent composition according to Claim 4, wherein the average particle size of the fine particles of the copolymer (A) is from 10 to 200 nm.

6. A method for producing a water/oil repellent composition, which comprises polymerizing a monomer mixture comprising the following monomer (a), the following monomer (b) and the following monomer (c) in a medium (C) in the presence of a surfactant (B) and a polymerization initiator to obtain a copolymer (A), wherein the medium (C) comprises water and a propylene glycol type solvent, and the amount of the propylene glycol type solvent is from 35 to 80 parts by mass per 100 parts by mass of the monomer mixture:
monomer (a): a monomer having a C₁₋₆ polyfluoroalkyl group;
monomer (b): a (meth)acrylate having no polyfluoroalkyl group and having a C₂₀₋₃₀ alkyl group; and
monomer (c): a halogenated olefin.

7. The method for producing a water/oil repellent composition according to Claim 6, wherein the propylene glycol type solvent is dipropylene glycol or dipropylene glycol monomethyl ether.

8. The method for producing a water/oil repellent composition according to Claim 6 or 7, wherein the amount of the water is from 80 to 400 parts by mass per 100 parts by mass of the monomer mixture, and the mass ratio (water/propylene glycol type solvent) of the water to the propylene glycol type solvent is from 2 to 5.

9. The method for producing a water/oil repellent composition according to any one of Claims 6 to 8, wherein the monomer mixture further contains the following monomer (d):
monomer (d): a monomer having no polyfluoroalkyl group and having a polar group or a crosslinkable functional group.

10. The method for producing a water/oil repellent composition according to any one of Claims 6 to 9, wherein the amount of the surfactant (B) is from 1 to 10 parts by mass per 100 parts by mass of the monomer mixture.

11. The method for producing a water/oil repellent composition according to any one of Claims 6 to 10, wherein the water/oil repellent composition as defined in any one of Claims 1 to 5 is produced.

12. A method for producing the water/oil repellent composition as defined in any one of Claims 1 to 5, which comprises diluting the water/oil repellent composition obtained by the method for producing a water/oil repellent composition as defined in any one of Claims 6 to 10 with water and/or a propylene glycol type solvent.

13. A method for treating an article, which comprises treating an article with a treating liquid containing the water/oil repellent composition as defined in any one of Claims 1 to 5.

14. The method for treating an article according to Claim 13, wherein the treating liquid further contains a thermosetting agent.
